# EUROPEAN PATENT APPLICATION

(11) **EP 2 778 406 A1**
(43) Date of publication of application: **17.09.2014**
(21) Application number: 13159213.1
(22) Date of filing: 14.03.2013
(51) Int. Cl.: F03G 6/04, F03G 6/06, F01K 3/18

(54) **Thermal energy storage and generation system and method**

(71) Applicant: ABB Technology AG, 8050 Zürich (CH)
(72) Inventor: Z'Graggen, Andreas, 8004 Zürich (CH); Hemrle, Jaroslav, 5405 Baden-Dättwil (CH); Kaufmann, Lilian, 5413 Birmenstorf (CH); Mercangoez, Mehmet, 4332 Stein (CH)
(74) Representative: ABB Patent Attorneys

(57) **Abstract**

A thermal energy storage and generation system is described. The system comprises: a shared thermal storage arrangement comprising a thermal storage medium for storing energy as latent and/or sensible heat; an electro-thermal energy storage system operable to convert electric energy into heat for storing in the shared thermal storage arrangement in an ETES charging mode; a solar thermal heat storage system operable to store thermal solar energy in the thermal storage arrangement; and a thermal power generation unit configured to convert thermal energy stored in the shared thermal storage arrangement into mechanical work and/or electric energy.

## Description

### FIELD OF THE INVENTION

The present invention relates generally to thermal storage of solar and electric energy for subsequent conversion into mechanical and/or electric energy. It relates in particular to a system and method for thermal energy storage according to the preamble of the independent patent claims.

### BACKGROUND OF THE INVENTION

Solar power plays an ever increasing role in the generation of usable energy, in particular electricity. One important class of solar electric power generation systems and stations is based on an intermediate storage of solar energy in the form of thermal energy by heating, melting and/or evaporating a thermal energy carrier medium and subsequently storing the heated, melted and/or evaporated thermal energy carrier medium in a thermal storage arrangement. At some later time, thermal energy thus stored is converted into work and/or electric energy by means of a thermal power generation unit, e.g. a heat engine wherein previously heated, melted and/or evaporated thermal energy carrier medium is cooled, solidified and/or condensed.

One important advantage of the intermediate storage of solar power in the form of thermal energy is that a delay may be introduced between a collection of solar energy and a generation of work and/or electric energy. This allows for production of electric energy even during periods with no or insufficient solar irradiation, in particular during night or when shading by clouds occurs.

However, once all readily available energy previously stored by heating, melting and/or evaporating thermal energy carrier medium has been used up, the solar electric power generation system or station will have to stay idle until sufficiently high solar irradiation levels are again reached.

In particular during winter and/or prolonged periods of bad weather, solar electric power generation systems and stations may thus have to remain idle or at least underused for unsatisfactorily long periods of time.

### BRIEF DESCRIPTION OF THE INVENTION

It is an objective of the invention to allow for an increased utilization of solar thermal power plants during prolonged periods of reduced or absent solar irradiation. This objective is achieved by a thermal energy storage system according to claim 1 and a method according to claim 12. Preferred embodiments are evident from the dependent claims.

A thermal energy storage and generation system in accordance with the invention comprises: a shared thermal storage arrangement comprising a thermal storage medium for storing energy as latent and/or sensible heat; an electro-thermal energy storage system operable to convert electric energy into heat for storing in the shared thermal storage arrangement in an ETES charging mode; a solar thermal heat storage system operable to store thermal solar energy in the thermal storage arrangement; and a thermal power generation unit configured to convert thermal energy stored in the shared thermal storage arrangement into mechanical work and/or electric energy.

In a method in accordance with the invention for operating a solar power station, said solar power station being adapted to store solar energy by heating a thermal storage medium through solar irradiation and storing heated thermal storage medium in a thermal storage arrangement; and to recover stored energy by driving a thermal power generation unit under consumption of heat stored in heated thermal storage medium; when solar irradiation falls below a given first threshold value, and electricity is available at a price below a second threshold value, electric energy is stored by heating thermal storage medium by means of a heat pump; and electric energy as stored in the previous step is subsequently recovered under consumption of heat stored in heated thermal storage medium by means of the thermal power generation unit or another thermal power generation unit.

If technically possible but not explicitly mentioned, also combinations of embodiments of the invention described in the above and in the following may be embodiments of the method and the system. These and other aspects of the invention will be apparent from and elucidated with reference to the embodiments described hereinafter.

### BRIEF DESCRIPTION OF THE DRAWINGS

The subject matter of the invention will be explained in more detail in the following text with reference to preferred exemplary embodiments, which are illustrated in the attached drawings, in which:

Fig. 1 shows a simplified schematic diagram of an exemplary embodiment of a thermal energy storage system in accordance with the present invention;

Figure 2 shows the electro-thermal energy storage system part of the thermal energy storage system from Fig. 1 in a charging mode;

Fig. 3 shows exemplary operating conditions for the preferred embodiment from Fig. 2;

Fig. 4 shows the electro-thermal energy storage system part of the thermal energy storage system from Fig. 1 in a discharging mode;

Fig. 5 shows a simplified schematic diagram of another exemplary embodiment of a thermal energy storage system in accordance with the present invention.

For consistency, the same reference numerals are used to denote similar elements illustrated throughout the figures.

### DETAILED DESCRIPTION OF PREFERRED EMBODIMENTS

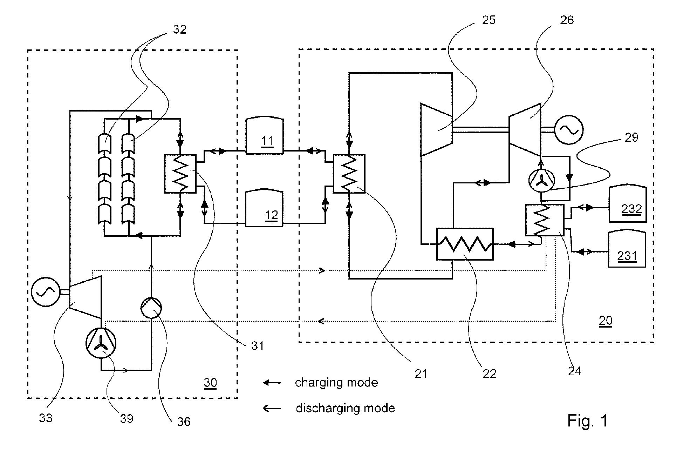

Fig. 1 shows a simplified schematic diagram of a preferred embodiment of a thermal energy storage system in accordance with the present invention.

A shared thermal storage arrangement comprises a thermal hot storage 11 for storing hot thermal storage fluid; and a thermal cool storage 12 for storing cool thermal storage fluid. The shared thermal storage arrangement further comprises a thermal storage fluid circuit which connects the thermal hot storage 11 with the thermal cool storage 12 via a first heat exchanger and a second heat exchanger, so that working fluid may circulate between the thermal hot storage 11 and the thermal cool storage 12 or vice versa through one or both of the first and second heat exchangers in dependence on a setting of one or more valves, switches and/or pumps etc. (not shown in the Fig. 1 for the sake of better readability) comprised by the thermal storage fluid circuit,. Thermally coupled to the thermal storage fluid circuit by means of the first heat exchanger is a working fluid circuit of an electro-thermal energy storage (ETES) system part 20, which will be described in more detail below.

Electro-thermal energy storage systems, previously also referred to as thermo-electric energy storage (TEES) systems, are known as such and are for example described in EP 2312129 A1, which is hereby included by reference in its entirety. A generic electro-thermal energy storage system comprises: a hot side thermal storage arrangement comprising a hot side heat exchanger; a cold side thermal storage arrangement comprising a cold side heat exchanger; a thermodynamic cycle unit configured to transfer thermal energy from the cold side storage arrangement to the hot side storage arrangement in a charging mode, and to convert thermal energy from the hot side storage arrangement into work and, preferably, subsequently into electric energy in a discharging mode, wherein the thermodynamic cycle unit comprises a fluid circuit for circulating a working fluid through the hot side heat exchanger as well as through the cold side heat exchanger, and wherein the fluid circuit further comprises a pump for maintaining a circulation of working fluid in the discharging mode and a first turbine for expanding working fluid under generation of work in the discharging mode.

In the context of the present invention, the ETES system part 20 of the preferred embodiment shown on Fig. 1 may be thought of as a specific example of a generic electro-thermal energy storage system as described in the previous paragraph for which the shared thermal storage arrangement serves as hot side thermal storage arrangement and the first heat exchanger as ETES hot side heat exchanger 21.

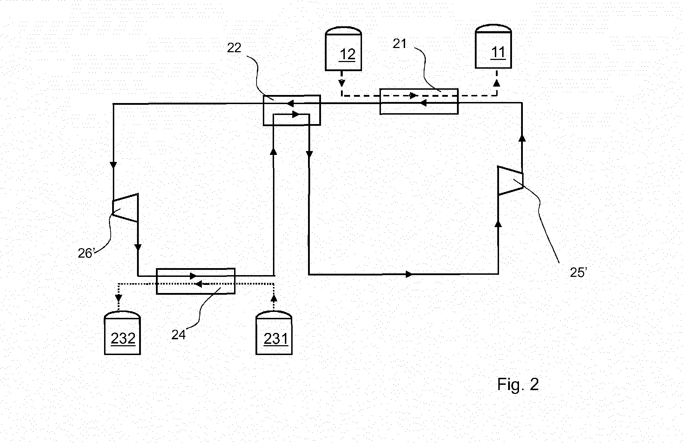

More specifically, the ETES system part 20 of the preferred embodiment shown on Fig. 1 will be described below with reference to Figs. 2 to 5.

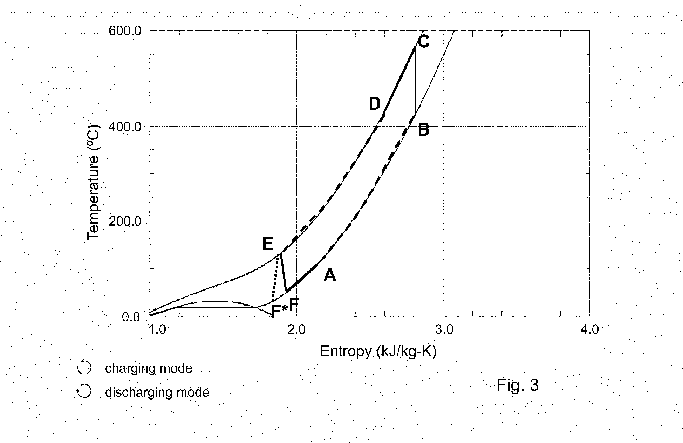

Fig. 2 shows the electro-thermal energy storage system part 20 of the thermal energy storage system from Fig. 1 in a charging mode. Fig. 3 shows an entropy-temperature trajectory of a thermodynamic charging cycle that CO₂ as a preferred, exemplary working fluid in the electro-thermal energy storage system part 20 will undergo in the charging mode.

For charging of the storage in an ETES charging mode, on a low pressure side of the thermodynamic charging cycle working fluid at a pressure P₁ between 40 and 70 bar, preferably between 50 and 60 bar, heats up in a regenerative heat exchanger 22 as represented by the dashed curve in Fig. 3 going from point A to point B. The working fluid then enters an electrically driven charge compressor 25'. This is the point where electrical energy is provided via the charge compressor 25' to ETES system part 20. A compression step of the thermodynamic charging cycle is shown as going from point to C in Figure 3. The working fluid heats up further to a maximum temperature during the compression step and reaches a higher pressure P₂ between 120 and 200 bar, preferably between 150 and 170 bar. The hot working fluid at pressure P₂ enters the ETES hot side heat exchanger 21 where it flows countercurrent against cool thermal storage fluid. In the ETES hot side heat exchanger 21 the hot working fluid transfers thermal energy to the cool thermal storage fluid coming from thermal cool storage 12 at a temperature T₁ between 290°C and 450°C, preferably between 410°C and 430°C, which is heated up and delivered to thermal hot storage 11 at a temperature T₂ > T₁ with T₂ between 450°C and 650°C, preferably between 580°C and 600°C. Exchange of heat with cool thermal storage fluid is shown as the line going from point C to D in Figure 3.

Next the working fluid already cooled in ETES heat exchanger 21 enters regenerative heat exchanger 22 and delivers its remaining thermal energy to working fluid flowing countercurrent on the low pressure side of the thermodynamic charging cycle, which is depicted by another dashed curve going from point E to D in Fig. 3. After having passed regenerative heat exchanger 22 the working fluid still has useful energy due to its high pressure state at P₂. This energy is recovered by means of a charge turbine 26' where the working fluid expands back to pressure P₁, and transferred either mechanically or electrically to the charge compressor 25'. The energy state of the working fluid following this expansion is too low for it to be heated solely by regenerative heat exchange in regenerative heat exchanger 22. Therefore an ETES cold side thermal storage arrangement is used to heat the working fluid in an ETES cold side heat exchanger 24, where warm cold side thermal storage fluid flows countercurrent to the working fluid. Thermal energy is harvested from the warm cold side thermal storage fluid coming from a thermal warm storage 231 at a temperature of T₃ (preferably between 80°C and 100°C), said thermal warm storage 231 acting as ETES cold side thermal reservoir, and going to a thermal cold storage tank 232 at a temperature of T₄ < T₃, where T₄ is preferably between 30°C and 50°C. This final part of the thermodynamic charging cycle corresponds to going from point F to A in Fig. 3.

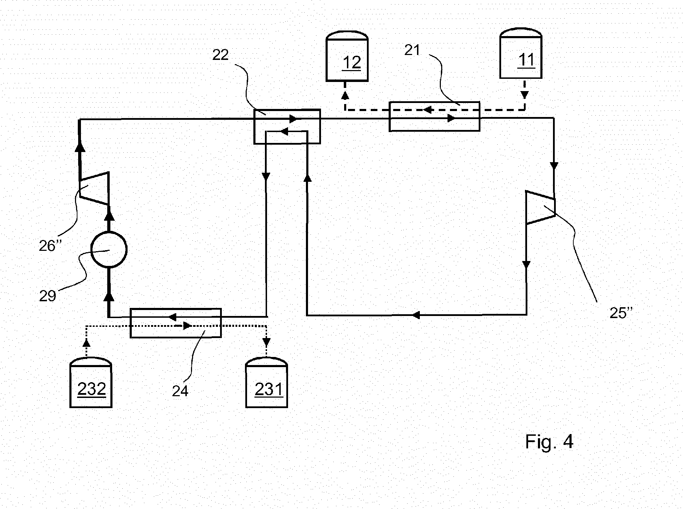

Fig. 4 shows the electro-thermal energy storage system part of the thermal energy storage system from Fig. 1 in an ETES discharging mode. An entropy-temperature trajectory of a thermodynamic discharging cycle that again CO₂ as a preferred, exemplary working fluid in the electro-thermal energy storage system part will undergo in the discharging mode will also be explained based on Fig. 3.

The discharging mode corresponds essentially to a reversed operation of the charging mode with one exception being an additional cooling by means of an an ambient heat sink in form of an ETES air cooler 29. Such additional cooling is necessary to dissipate losses due to an irreversibility in an ETES operation and corresponds to going from point F to F* in Figure 3. Additional cooling by means of ETES air cooler 29 is carried out before the working fluid enters a discharge compressor 26" at a pressure P₁' which is at least approximately equal to P₁, i.e. P₁' ≈ P₁. Compressor work required will drop as an ambient temperature drops. This compression from pressure P₁' to a pressure P₂' which again is at least approximately equal to P₂, i.e. P₂' ≈ P₂, is depicted as a dotted line going from point F* to E. Next, working fluid leaving discharge compressor 26" is further heated up in regenerative heat exchanger 22, corresponding to going from point E to D on Fig. 3. The working fluid reaches its highest temperature in the thermodynamic discharging cycle as it is heated in the ETES heat exchanger 21. Here the working fluid flows countercurrent to the hot thermal storage fluid coming from thermal hot storage 11 at a temperature T₂' which is at least approximately equal to T₂, i.e. T₂' ≈ T₂ and going to thermal cool storage 12 at a temperature T₁' which is at least approximately equal to T₁, i.e. T₁' ≈ T₁. This step corresponds to going from point D to C in Fig. 3. Next the hot working fluid at pressure P₂' is expanded back down to pressure P₁' in a discharge turbine 25" and the thermal energy stored is converted back to work and, subsequently, electrical energy and may in particular be made available to users, customers etc., except preferentially for a fraction required to drive the discharge compressor 26"; which fraction may be extracted either electrically or mechanically from the work recovered in discharge turbine 25". This expansion step corresponds at least ideally to going from point C to B on Fig. 3. Following the expansion thermal energy remaining in the working fluid is recovered first in the regenerative heat exchanger 22 - corresponding to the dashed line going from point B to A on Figure 3 - then second in ETES cold side heat exchanger 24 - corresponding to going from point A to F in Fig. 3, and finally discharged to the ambient through air cooler 29, which acts as an external cooling heat exchanger for the ETES system part 20; thus closing the thermodynamic discharging cycle. As the working fluid cools in the ETES cold side heat exchanger 24, cold thermal storage fluid that was stored in thermal cold storage 232 and having a temperature T₄' which is at least approximately equal to T₄, i.e. T₄' ≈ T₄, is heated back while flowing countercurrent to the working fluid and transferred to thermal warm storage 231 having a temperature T₃' which is at least approximately equal to T₃, i.e. T₃' ≈ T₃.

Preferred operating conditions for the preferred embodiment may also be seen from Fig. 3. The operating conditions are chosen to be able to use water under atmospheric pressure as an ETES cold side thermal storage fluid and molten salt as an ETES hot side thermal storage fluid. The preferred choice of CO₂ as ETES working fluid at pressures as specified above was influenced by the high density and high heat transfer coefficient of CO₂ under these conditions and allows to minimize heat exchanger surface as well as a size of the thermodynamic machines. The preferred embodiment reduces the total volume of the thermal storage materials and, due to large temperature differences also reduces a sensitivity of a roundtrip efficiency to approach temperatures in the thermal storage heat exchangers compared to other alternative ETES designs. There is no need for heat balancing with another refrigeration cycle and a required amount of cooling water/air is minimal - only corresponding to the exergy losses in the thermodynamic charging and discharging cycles.

As reflected by Figs. 2 and 4, charging and discharging modes may be implemented through and executed by individual thermodynamic cycle units. Since efficiencies of thermodynamic machines are very dependent on individual operating conditions a preferred embodiment of the system according to the invention would have four individual thermodynamic machines - a charge compressor 25' and a discharge compressor 26" as well as a charge turbine 26' and a discharge turbine 25".

As reflected by Fig. 1 and known as such from prior art ETES systems, charging and discharging modes may alternatively be implemented through and executed by a single thermodynamic cycle unit, with a first thermodynamic machine 25 acting as charge compressor 25' in charging mode, and as discharge turbine 25" in discharging mode; and/or a second thermodynamic machine 26 acting as charge turbine 26' in charging mode, and as discharge compressor 26" in discharging mode. In this case, charging and discharging mode share an at least essentially identical working fluid circuit, and the flow direction of the working fluid is reversed when switching from charging and discharging mode and vice versa; albeit with individual components and/or stages of individual components in the working fluid circuit bypassed in either charging or discharging mode by means of valves, switches etc. that allow for modifications of the flow path.

Alternatively, the charge compressor 25' may advantageously also be used as compressor in ETES discharging mode at a different operating point; and/or also the charge turbine 26' may be operated as turbine in the ETES discharging mode. This allows to avoid difficulties that may otherwise result when running the charge compressor 25' or the charge turbine 26' in reverse to act as turbine or compressor, respectively.

In another preferred embodiment, a number of stages or an internal arrangement of a compressor or turbine may be chosen such that via manipulation of the flow path via valves etc., some stages or parts of the machine can be fully or partially active in ETES charging mode or ETES discharging mode only. Such a special system arrangement allows for a tradeoff between providing four individual thermodynamic machines as described above and having a more compact and cost efficient ETES systemReturning to Fig. 1, thermally coupled to the thermal storage fluid circuit by means of second heat exchanger 31 is a thermal transport fluid circuit of a solar thermal heat storage system, or, more specifically, a collecting solar power plant (CSP), which as such is known from the state of the art, and which forms the CSP system part 30 of the exemplary embodiment shown in Fig. 1. The CSP system part 30 comprises a plurality of solar collectors 32, which are configured to heat thermal storage fluid from thermal cool storage 12 in a CSP charging mode for storing in thermal hot storage 11 through a CSP thermal transport fluid - preferably water - circulating between the solar collectors and the second heat exchanger 31 in a CSP charging circuit.

In a CSP discharging mode, CSP thermal transport fluid is evaporated in second heat exchanger 31, and subsequently enters CSP turbine 33, where it is expanded under generation of work. The expanded CSP thermal transport fluid then enters CSP air cooler 39 for additional cooling. CSP pump 36 is provided to return the cooled CSP thermal transport fluid to second heat exchanger 31, thus closing the thermodynamic cycle of the CSP discharging mode.

With CO₂ as preferred choice for the ETES system part's working fluid at operating conditions as specified above with reference to Fig. 3, molten salt may be used as ETES hot side thermal storage fluid in combination with unpressurized water as ETES cold side thermal storage fluid. This allows to extend existing solar electric power generation systems and stations which comprise molten salt thermal storage arrangements to obtain a thermal energy storage system in accordance with the invention. At the chosen operating conditions, CO₂ is permanently in a gaseous state during ETES thermodynamic charging and discharging cycles. The combination of ETES working fluid kept permanently in gaseous state, i.e. either in gas phase or in transcritical condition - i.e. at a pressure and temperature above critical point - in combination with regenerative heat exchange as provided by regenerative heat exchanger 22 allows for efficient heat exchange with both the shared thermal storage arrangement acting as ETES hot side storage arrangement as well as the ETES cold side thermal storage arrangement in spite of a very large difference between respective operation temperature ranges, in particular between a temperature of the thermal cool storage 12 and a temperature of the thermal warm storage 231, which exceeds 190°C, preferably 310°C in the examples given above.

In another preferred embodiment, ETES air cooler 29 and CSP air cooler 39 are replaced by a single shared air cooler that is connected to both CSP system part 30 and ETES system part 20 through appropriate fluid circuitry.

In another preferred variant of the thermal energy storage system similar to the one shown in Fig. 1, the ETES system part consists only of an ETES charging unit, and discharging of the shared thermal storage arrangement is achieved through the CSP system part 30 via CSP turbine 33. Low quality heat contained in steam produced during CSP discharging mode may be used to recharge the ETES cold side thermal storage arrangement, i.e. to heat ETES cold side thermal storage fluid from ETES thermal cold storage 232, and store the heated cold side thermal storage fluid in ETES thermal warm storage 231, where it will be available during ETES charging cycles. By way of example, steam may may be extracted from CSP turbine 33 at various pressure levels, and preferably returned to CSP air cooler 39 for final condensation or cooling, as indicated by the dotted lines connecting CSP turbine 33 an CSP air cooler 39 in Fig. 1.

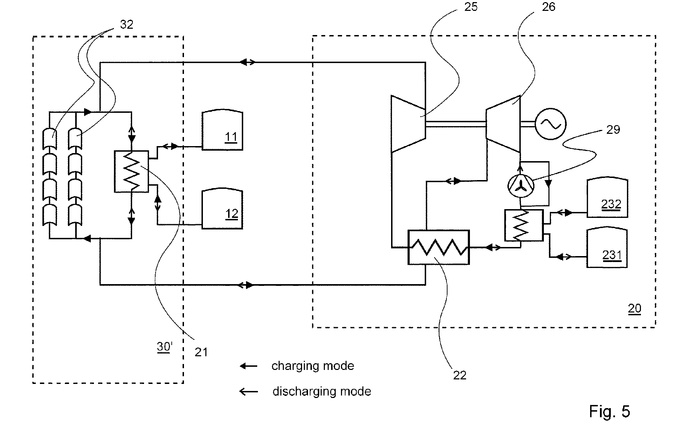

Another preferred embodiment of the thermal energy storage in accordance with the present invention is shown in Fig. 5. Tighter integration is obtained by operating both CSP and ETES system parts with a single thermal fluid acting as CSP thermal transport fluid and ETES working fluid. In such an embodiment, only one power block is required.

As discussed in the previous sections, varying degrees of integration or overlap between CSP and ETES system parts are possible. At integration level one, ETES and CSP system parts solely share the thermal storage arrangement, which preferably is a molten salt thermal storage arrangement. At integration level two, a single discharging mode, preferably a steam turbine cycle, implemented either in the CSP system part or the ETES system part, is used for discharging; and solar energy or ETES charging mode, preferably with CO₂, for charging. Preferably, the ETES warm thermal storage, preferably water at atmospheric pressure near boiling point, is replenished by using low grade steam from the CSP discharging mode. Such an arrangement preferably comprises a common steam cycle and includes a shared air cooler. Integration level three is characterized by a single thermal fluid, preferably CO₂ for both CSP thermal transport fluid and ETES working fluid; and wherein work is preferably recovered by means of the ETES discharging cycle.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the description above and in the patent claims below, the term "comprising" does not exclude other elements or steps, and the indefinite article "a" or "an" does not exclude a plurality. The mere fact that certain features are recited in mutually different dependent patent claims does not indicate that a combination of these features cannot be used to advantage. Any reference signs in the patent claims should not be construed as limiting the scope.

Different values of a physical quantity, in particular pressure or temperature, are said to be at least approximately equal if their difference is smaller than ten times a measurement tolerance; preferably smaller than the measurement tolerance, and most preferably smaller than half the measurement tolerance, where the measurement tolerance is given by an accuracy of standard measurement methods and/or equipment that a person skilled in the art the present invention pertains to would apply to measure the respective physical quantity. Alternatively, values may be regarded as at least approximately equal if their difference is smaller than 10%, preferably smaller than 2%, and most preferably smaller than 0.5%.

**LIST OF REFERENCE SYMBOLS**

| | |
|---|---|
| 11 | thermal hot storage |
| 12 | thermal cool storage |
| 20 | ETES system part |
| 21 | first heat exchanger, ETES hot side heat exchanger |
| 22 | regenerative heat exchanger |
| 231 | thermal warm storage |
| 232 | thermal cold storage |
| 24 | ETES cold side heat exchanger |
| 25 | first thermodynamic machine |
| 25' | charge compressor |
| 25" | discharge turbine |
| 26 | second thermodynamic machine |
| 26' | charge turbine |
| 26" | discharge compressor |
| 29 | ETES air cooler |
| 30 | CSP system part |
| 31 | second heat exchanger, CSP heat exchanger |
| 32 | solar collectors |
| 33 | CSP turbine |
| 36 | CSP pump |
| 39 | CSP air cooler |

## Claims

1. A thermal energy storage and generation system comprising
a) a shared thermal storage arrangement comprising a thermal storage medium for storing energy as latent and/or sensible heat,
b) an electro-thermal energy storage system (20) operable to convert electric energy into heat for storing in the shared thermal storage arrangement in an ETES charging mode,
c) a solar thermal heat storage system (30, 30') operable to store thermal solar energy in the shared thermal storage arrangement,
d) a thermal power generation unit (25, 25", 33) configured to convert thermal energy stored in the shared thermal storage arrangement into mechanical work and/or electric energy.

2. The system according to claim 1, wherein the electro-thermal energy storage system (20) is operable as a heat pump for transferring thermal energy from an ETES cold side thermal reservoir to the first thermal storage medium in an ETES charging mode via an ETES working fluid.

3. The system according to claim 2, wherein the electro-thermal energy storage system (20) is operable in an ETES discharging mode to act as thermal power generation unit.

4. The system according to claim 3, wherein the electro-thermal energy storage system (20) is switchable between the ETES charging mode and the ETES discharging mode by reversing a flow direction of the ETES working fluid.

5. The system according to one of the previous claims, wherein the electro-thermal energy storage system (20) comprises an ETES working fluid circuit, said ETES working fluid circuit comprising an ETES heat exchanger (21) for exchanging thermal energy, in particular heat, with the first thermal storage medium.

6. The system according to claim 5, wherein the ETES working fluid circuit comprises a turbine (25, 25") and an air cooler (29).

7. The system according to claim 5, wherein the solar thermal heat storage system (30, 30') comprises a solar collector (32) connectable to the ETES working fluid circuit for heating ETES working fluid by means of solar energy irradiation.

8. The system according to one of the previous claims, wherein the solar thermal heat storage system (30, 30') may be operated in an solar-thermal discharging mode to act as thermal power generation unit or as an additional thermal power generation unit.

9. The system according to one of the previous claims, wherein the solar thermal energy storage unit (30, 30') comprises a solar thermal transport fluid circuit, said solar thermal transport fluid circuit comprising an solar thermal heat exchanger (31) for exchanging thermal energy, in particular heat, with the first thermal storage medium.

10. The system according to the previous claim, wherein the solar thermal transport fluid circuit comprises a heat engine, preferably a steam turbine (33), and an air cooler (39).

11. The system according to claim 6 and claim 10, wherein the solar thermal working fluid circuit (30, 30') and the ETES working fluid circuit (20) share a shared air cooler (29, 39).

12. A method for operating a solar power station, said solar power station being adapted to
a) store solar energy by
i) heating a thermal storage medium through solar irradiation and
ii) storing heated thermal storage medium in adx thermal storage arrangement; and to
b) recover stored energy by driving a thermal power generation unit under consumption of heat stored in heated thermal storage medium;
c) **characterized in that**
d) when solar irradiation falls below a given first threshold value, and electricity is available at a price below a second threshold value, electric energy is stored by heating thermal storage medium by means of a heat pump,
e) electric energy as stored in step d) is subsequently recovered under consumption of heat stored in heated thermal storage medium by means of the thermal power generation unit or another thermal power generation unit.

13. The method of claim 12, wherein heating of the thermal storage medium comprises melting of solid thermal storage medium and/or evaporation of liquid thermal storage medium.

14. The method of claim 12 or 13, wherein an electro-thermal energy storage system in charging mode is used as the thermal power generation unit in step 12 d).
